# EUROPEAN PATENT APPLICATION

(11) **EP 0 866 032 A1**
(43) Date of publication of application: **23.09.1998**
(21) Application number: 97200840.3
(22) Date of filing: 21.03.1997
(51) Int. Cl.: C02F 1/04, B01D 1/22, B01D 3/10, B01D 5/00, G03C 11/00

(54) **Apparatus for the concentration of a waste water-based liquid**

(71) Applicant: AGFA-GEVAERT N.V., 2640 Mortsel (BE)
(72) Inventor: Verhoest, Bart c/o Agfa-Gevaert N.V., 2640 Mortsel (BE)

(57) **Abstract**

The apparatus comprises a body (12) having a chamber (14) therein of circular cross-section, means (18) for circulating the waste liquid through the chamber, heat supply means for evaporating water from waste liquid in the chamber (14) and a scraper (16) for scraping the circular wall of the chamber (14) to remove any solid material thereon. The scraper (16) comprises a screw and drive means are provided to drive the screw in a rotational direction to scrape the circular wall and in an axial direction to expel concentrated waste liquid from the chamber (14). The scraper scrapes the chamber wall and concentrated waste liquid is expelled from the chamber in a particular convenient manner. The scraper also mixes the waste so that it has a homogeneous temperature.

## Description

### FIELD OF THE INVENTION

This invention relates to an apparatus for the concentration of a waste water-based liquid, in particular waste liquid from photographic material processing machines.

### BACKGROUND OF INVENTION

Photographic processing machines produce water-based liquid waste which contains, for example, quantities of gelatine and silver. Rather than discard this waste as such, it is preferred to concentrate it and then optionally to treat the concentrated waste to remove components which can either be reused or must be disposed of in a special environmentally acceptable manner.

To concentrate the waste liquid an apparatus is known, for example from European patent application EP 0 633 047-A (Agfa-Gevaert NV) in which the waste liquid is brought into contact with a heated surface of a drum located within a chamber to evaporate water from the waste liquid. A scraper is provided for scraping the drum surface to remove any solid material thereon. The chamber is subjected to a reduced pressure. While this method can be successful, its energy consumption is high.

### OBJECTS OF INVENTION

It is an objective of the present invention to provide an apparatus in which the concentration of a waste water-based liquid can be carried out in an efficient and convenient manner.

### SUMMARY OF THE INVENTION

We have discovered that this objective and other useful advantages can be achieved when the chamber is of circular cross-section, the surface is constituted by a circular wall of the chamber, the scraper comprises a screw which can be driven in a first rotational direction to scrape the circular wall.

Thus, according to the invention there is provided an apparatus for the concentration of a waste water-based liquid, comprising a chamber, a surface within the chamber, means for bringing the waste liquid into contact with the surface, heat supply means for evaporating water from the waste liquid in contact with the surface and a scraper for scraping the surface to remove any solid material thereon, characterised in that the chamber is of circular cross-section, the surface is constituted by a circular wall of the chamber, the scraper comprises a screw and drive means are provided to drive the screw in a first rotational direction to scrape the circular wall.

The evaporator comprises a scraper for scraping the circular wall of the chamber to remove any solid material thereon. The scraper is preferably in the form of a screw, such as an Archimedean screw, with drive means provided to drive the screw in a first rotational direction to scrape the circular wall and in a second rotational direction to expel concentrated waste liquid from the chamber. Means are preferably provided for circulating the waste liquid through the chamber. For example, the scraper is preferably hollow, allowing mixing and circulation of the waste liquid throughout the chamber while the evaporation process continues. For example, where the scraper is in the form of a hollow screw, the liquid may be pumped upwards by movement of the screw flights against the walls of the chamber and pass downwards through the hollow interior of the screw. Good mixing ensures an equal and homogeneous temperature of the circulating liquid. Forming the scraper in the form of a screw is also a convenient arrangement for ensuring the discharge of the concentrated waste. Rotating the screw in an opposite direction to the mixing direction can cause the waste to be directed to a discharge opening of the chamber.

In a preferred embodiment, the scraper carries a closure for the chamber. This closure may be operated in a convenient manner when the drive includes a clutch which, when engaged, enables the axial movement of the screw to open the chamber.

The process may be carried out in such a manner that at least a portion of the heat of evaporation is recovered from the evaporated water and brought to the evaporator. The heat supply means may include heat pumps. Heat pumps differ from other heating devices in that, when operating, both heated and cooled regions are generated. In particular, the heat pump may be a thermoelectric (i.e. Peltier) heat pump. Peltier heat pumps are capable of controlling the temperature difference between components between which they are fitted. These elements have a hot side and a cold side, the orientation depending upon the direction of current passed therethrough. The temperature difference is sufficient, in the context of the present invention, to raised the temperature of the waste liquid to a temperature at which, under the prevailing reduced pressure, water is evaporated therefrom at a significant rate or even the liquid boils. Peltier modules are available in a great variety of sizes, shapes, operating currents, operating voltages and ranges of pumping capacity. Usually a larger number of couples are used, operating at lower currents. The user can tailor quantity, size or capacity of the module to fit the exact requirement without paying for excess capacity. The recovery and re-use of at least a portion of the heat of evaporation leads to a particularly efficient use of heat energy. Up to 40% of the consumed energy may be saved in this manner. This may be achieved when the reduced pressure is produced by passing a fluid through a venturi, water vapour from the evaporator condensing in the fluid and giving up its heat of evaporation thereto. After passing through the venturi, the fluid may then be circulated through a heat exchanger. Where, for example, the heat pump is constituted by a Peltier element, heat flows towards the "cold" side of the Peltier element and is then ready to be pumped up by the Peltier element. In this way evaporation heat is recovered.

The Peltier elements or other heating device may be positioned in contact with at least one heat exchange surface of the evaporator. The evaporator may comprise a body having a chamber therein of circular cross-section and a heat exchange external surface to which heat is applied for evaporation of water from the liquid in the chamber. If the heat exchange external surface is not parallel to the circular wall of the chamber, as will be the case in the simplest construction, the body may include disconformities therein to modify the flow of heat from the heat exchange surface to the chamber. This arrangement ensures uniform evaporation by bringing heat evenly to the total surface of the cylindrical chamber and thereby prevents the non-uniform build up of sludge on the chamber wall. The heat exchange surface may be constituted by at least one substantially flat surface, such as two oppositely disposed substantially flat surfaces. The disconformities may comprise holes formed in the body. A convenient manner to form these holes is to form the body in a number of parts having contacting faces, the holes being formed by grooves cut in the contacting faces. In the case of holes which are not too narrow, these may be formed by cores or mandrels over which the evaporator body is extruded.

The body of the evaporator may be formed of a heat conductive material such as a metal, in particular aluminium, for example extruded aluminium.

### DETAILED DESCRIPTION OF THE INVENTION

The invention will be described by the following illustrative embodiments with reference to the accompanying drawings without the intention to limit the invention thereto, and in which:

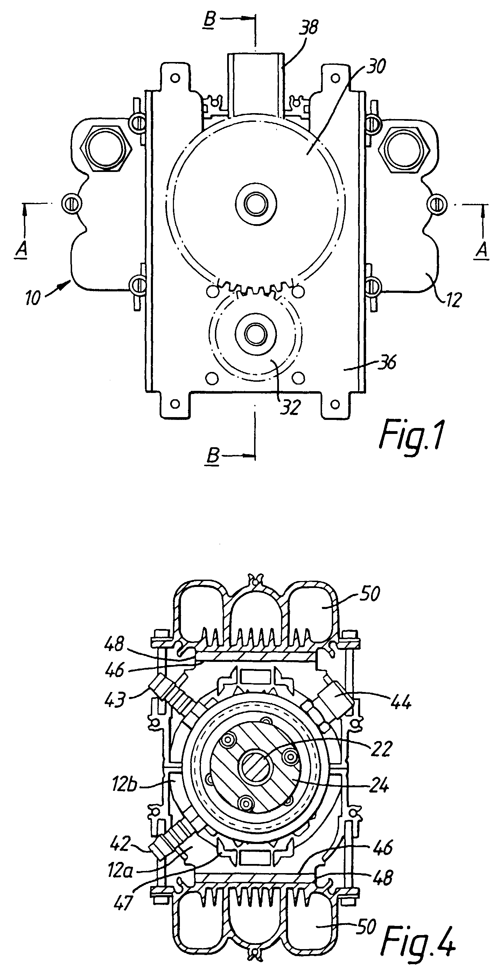

Figure 1 shows an apparatus according to the invention, viewed from above;

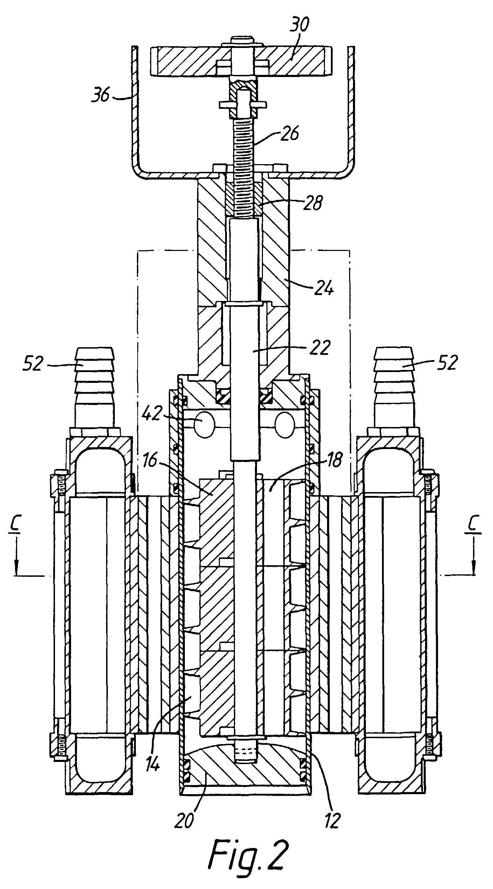

Figure 2 is a cross section of the apparatus, taken in the direction A - A in Figure 1;

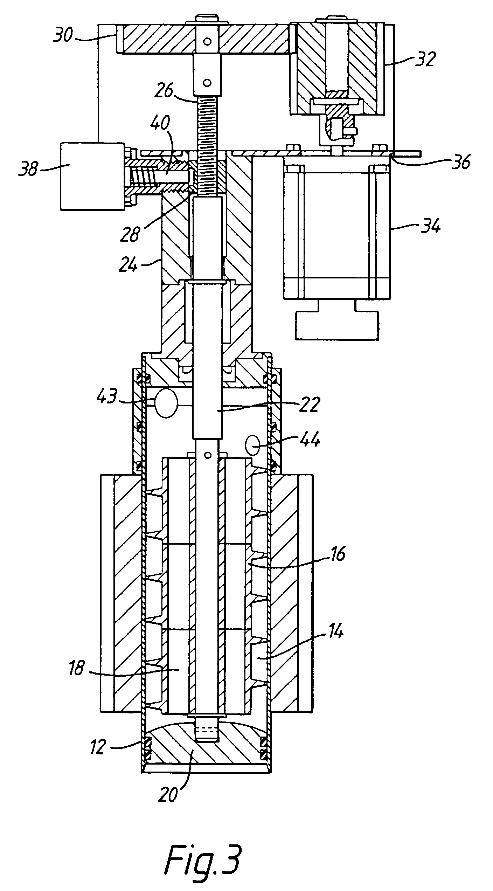

Figure 3 is a cross section of the apparatus, taken in the direction B - B in Figure 1;
Figure 4 is a cross section of the apparatus, taken in the direction C - C in Figure 2; and
Figure 5 is a schematic diagram showing the apparatus shown in Figures 1 to 4, together with a photographic processing machine.

The apparatus shown in the Figures for the concentration of a waste water-based liquid, includes an evaporator 10 comprising an extruded aluminium body 12 having a cylindrical chamber 14 therein of circular cross-section. Positioned within the chamber 14 is a mixing screw or scraper 16, which is in the form of an Archimedes screw having a hollow interior 18. The lower end of the scraper 16 carries a closure 20 for the chamber 14. The scraper 16 is mounted within the body 12 for limited axial movement, whereby the lower end of the chamber 14 can be opened and closed. The scraper 16 is mounted on a scraper shaft 22, which passes through a sleeve portion 24 of the evaporator body 12. One portion 26 of the scraper shaft 22 is threaded to a nut 28, positioned within the body sleeve 24, and normally capable of rotation with the scraper shaft 22 within the body sleeve 24. The extreme end of the scraper shaft 22 carries a toothed drive wheel 30, which engages a toothed draft cylinder 32 driven by a motor 34, such as a stepping motor or an adjustable speed DC motor. The motor 34, with its drive cylinder 32 are mounted on a mounting plate 36 fixedly secured to the evaporator body 12.

On one side of the evaporator body sleeve 24 is mounted an electromagnetic clutch 38 including a spring loaded pin 40. The pin 40 is normally spring loaded into a retracted position. However, operation of the electromagnetic clutch 38 extends the pin 40 into engagement with the nut 28 carried of the scraper shaft 22, thereby preventing the rotation of the nut 28 relative to the body sleeve 24.

An inlet 42 for waste liquid leads into the chamber 14 at a position above the upper extreme of the scraper 16. Vacuum is applied to the chamber 14 by way of a pipe connector 43, also positioned above the upper extreme of the scraper 16. A temperature sensor 44 is positioned within the chamber 14, immediately above the upper extreme of the scraper 16.

The evaporator body 12 has two opposite, substantially flat, heat exchange external surfaces 46, by which heat can be supplied to the chamber 14. The heat exchange external surfaces 46 are not parallel to the circular wall of the chamber 14. However, in order to ideally equalise the heat flow across the circular wall of the chamber 14, the body 12 includes disconformities in the form of holes 47 formed in the body 12 to modify the flow of heat from the heat exchange surface to the chamber 14. This arrangement ensures uniform evaporation by bringing heat evenly to the total surface of the cylindrical chamber and thereby prevents the non-uniform build up of sludge on the chamber 14 wall. A convenient manner to form these holes 47 is to form the body 12 in a number of parts 12a, 12b having contacting faces, the holes 47 being formed by grooves cut in the contacting faces. In the case of holes 47 which are not too narrow, these may be formed by cores or mandrels over which the evaporator body 12 is extruded.

Each of these heat exchange surfaces 46 carries an assembly of Peltier elements 48, so mounted with their heat generating faces against the heat exchange surfaces 46 of the evaporator 10 body 12. The opposed, heat absorbing faces of the Peltier element assemblies 48 are in contact with heat exchange chambers 50. These chambers 50 are each provided with liquid inlets 52 and outlets 54, to enable heating fluid to be passed in parallel through the these chambers 50.

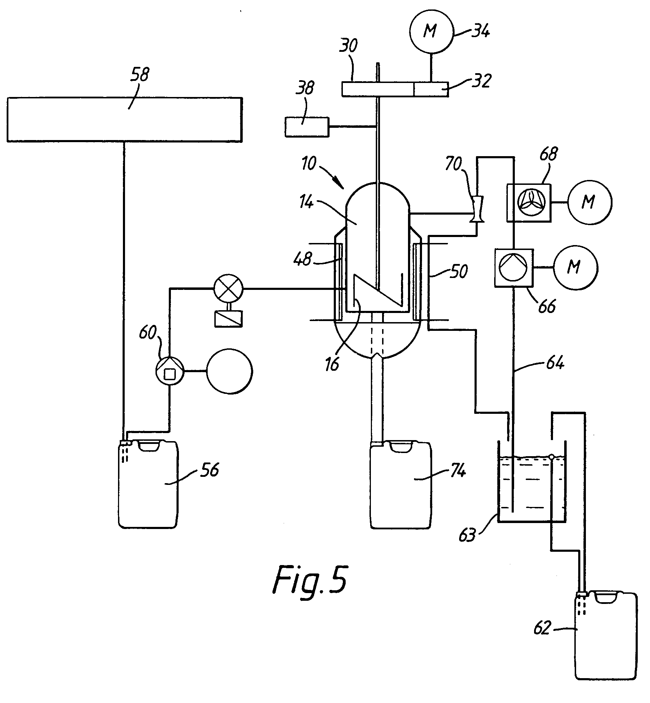

Referring to Figure 5, it will be seen that a waste liquid container 56 is provided to receive waste liquid from a photographic sheet or film processor 58. A pump 60 is provided to feed waste liquid from this container 56 to the evaporator 10. A fluid supply container 62, containing for example water, feeds a buffer container 63 which is in a circulation loop 64 including a circulation pump 66, a radiator 68 to reduce the heat of the pumped fluid substantially to ambient, and a venturi 70, fitted with a pressure sensor (not shown). The reduced pressure generated by the venturi 70 and sensed by the pressure sensor associated therewith is applied to the chamber 14 of the evaporator 10. The circulated water also passes through the heat exchange chambers 50 of the evaporator 10 before returning to the buffer container 63. The buffer container 63 serves to maintain a minimum volume of water in the circulation loop 64 for circulation through the venturi 70, thereby assuring a reduced pressure in the evaporator 10. A concentrated waste receiving container 74 is provided to receive concentrated waste from the evaporator 10.

In use, the apparatus shown in the Figures operates as follows. During use of the processor 58, waste water-based liquid, containing for example gelatine, silver, salts, polymeric components in solution or suspension, at a starting solids content of 1 to 20%, even as high as 50%, accumulates in the waste liquid container 56. This is fed by the pump 60 to the evaporator 10, to fill the chamber 14 to a level just above the upper extreme of the scraper 16. Water is fed around the circulation loop 64 to generate a reduced pressure of for example less than 0.4, such as from 0.1 to 0.2 bar (absolute) at the venturi 70, which reduced pressure is applied to the evaporator chamber 14. As the water is passed through the venturi 70, water vapour from the evaporator condenses therein, giving up its heat to raise the temperature of the circulating water above ambient, to for example 60°C. The optional radiator 68 keeps the temperature of the water passing to the venturi 70 close to ambient. A lower water temperature means a lower reduced (absolute)pressure and therefore a lower boiling point can thereby be achieved. Thus water at an elevated temperature passes through the heat exchange chambers 50. The Peltier elements 48 operate to generate a temperature difference between their cold faces and their hot faces in a manner known per se. For example, application of a potential difference of 10.5V across the Peltier elements may be capable of establishing a temperature difference of up to about 40 to 50°C. Thus the heat exchange surfaces 46 of the evaporator body 12 are increased to a temperature of about 80 to 85°C and transmit this generated heat to the evaporator chamber 14, causing the waste liquid therein to be heated towards its boiling point (60°C at 0.2 bar).

As the waste liquid evaporates, its solids content increases from, for example to about 60%, but at this concentration remains pumpable. It is however possible to run the process until the waste is substantially solid. As the evaporation process continues, the motor 34 causes rotation of the scraper 16 in a "first" rotational direction, at the rate of, for example 60 revolutions / minute, so as to remove any sludge from the chamber walls in an upward direction, the hollow interior 18 of the scraper 16 enabling the circulation of liquid therethrough as the process proceeds. As long as there is water in the waste liquid, the temperature and the pressure remain substantially constant. Once however the water is boiled out, the temperature will then increase. Once this position is reached, the electromagnetic clutch 38 is operated to advance the pin 40 into the nut 28, preventing rotation of the latter relative to the body sleeve 24. Operation of the motor 34 in the "opposite" direction now causes the portion 26 of the scraper shaft 22 to be fed through the nut 28, causing the scraper shaft 22 to move downwardly, thereby opening the bottom of the evaporator chamber 14. The electromagnetic clutch is now deactivated to withdraw the pin 40 out of the nut 28, allowing rotation of the latter relative to the body sleeve 24. Operation of the motor 34, still in the "opposite" direction, but now at high speed, causes concentrated waste to be pushed out of the evaporator chamber 14. Once the waste has been expelled, the motor 34 is stopped, the electromagnetic clutch 38 is operated to again advance the pin 40 into the nut 28, the motor 34 is driven in the "first" direction to close the bottom of the evaporator chamber 14. The electromagnetic clutch is now deactivated to withdraw the pin 40 out of the nut 28. The apparatus is then ready for the supply of a further quantity of waste liquid to be concentrated.

## Claims

1. An apparatus for the concentration of a waste water-based liquid, comprising a chamber (14), a surface (15) within said chamber, means (18) for bringing said waste liquid into contact with said surface, heat supply means (48) for evaporating water from said waste liquid in contact with said surface (15) and a scraper (16) for scraping said surface to remove any solid material thereon, characterised in that said chamber (14) is of circular cross-section, said surface is constituted by a circular wall (15) of said chamber, said scraper (16) comprises a screw and drive means (34) are provided to drive said screw in a first rotational direction to scrape said circular wall (15).

2. An apparatus according to claim 1, wherein said scraper (16) is an Archimedean screw.

3. An apparatus according to claim 1 or 2, wherein means (18) are provided for circulating said waste liquid through said chamber.

4. An apparatus according to claim 3, wherein said scraper (16) is hollow to enable circulation of said waste liquid through said chamber (14).

5. An apparatus according to any preceding claim, wherein said drive means (34) is capable of driving said screw in a second rotational direction to expel concentrated waste liquid from said chamber (14).

6. An apparatus according to any preceding claim, wherein said scraper (16) carries a closure (20) for said chamber (14).

7. An apparatus according to any preceding claim, wherein said drive means includes a clutch (38) which, when engaged, enables axial movement of said screw to open said chamber (14).

8. An apparatus according to any preceding claim, including means (70) for subjecting liquid in said evaporator (10) to reduced pressure and means (50) to enable at least a portion of the heat generated during the production of said reduced pressure is used for said heating.

9. An apparatus according to any preceding claim, wherein said heat supply means includes Peltier elements (48).

10. An apparatus according to any preceding claim, wherein said body (12) has a heat exchange external surface (46) to which heat is applied for evaporation of water from said liquid in said chamber (14), and wherein said heat exchange external surface is not parallel to the circular wall of said chamber and said body includes disconformities (46) therein to modify the flow of heat from said heat exchange surface to said chamber (14).

11. An apparatus according to any preceding claim, associated with a photographic material processing machine from which said waste water-based liquid is derived.
